# EUROPÄISCHE PATENTSCHRIFT

(11) **EP 3 669 142 B1**
(45) Veröffentlichungstag und Bekanntmachung des Hinweises auf die Patenterteilung: **09.06.2021**
(21) Anmeldenummer: 19722515.4
(22) Anmeldetag: 10.04.2019
(51) Int. Cl.: G01C 21/30, B60K 28/10, B60W 50/12

(54) **VERFAHREN ZUM STEUERN EINES ZUR DURCHFÜHRUNG EINES AUTOMATISIERTEN FAHRBETRIEBS EINGERICHTETEN FAHRZEUGSYSTEMS EINES FAHRZEUGS UND VORRICHTUNG ZUR DURCHFÜHRUNG DES VERFAHRENS**
METHOD FOR CONTROLLING A VEHICLE SYSTEM OF A VEHICLE SET UP FOR CARRYING OUT AN AUTOMATED DRIVING OPERATION AND DEVICE FOR CARRYING OUT THE METHOD
PROCÉDÉ DE COMMANDE D'UN SYSTÈME DE VÉHICULE D'UN VÉHICULE MIS EN PLACE POUR EFFECTUER UNE OPÉRATION DE CONDUITE AUTOMATIQUE ET DISPOSITIF POUR LA MISE EN OEUVRE DU PROCÉDÉ

(30) Priorität: 25.05.2018 DE 102018004229
(43) Veröffentlichungstag der Anmeldung: 24.06.2020
(73) Patentinhaber: Daimler AG, 70327 Stuttgart (DE)
(72) Erfinder: RIES, Florian, 70599 Stuttgart (DE); SCHUSTER, Frank, 71032 Böblingen (DE); HAUEIS, Martin, 71116 Gärtringen (DE); GHANAAT, Mohammad, 70565 Stuttgart (DE)
(74) Vertreter: JENSEN & SON
(86) Internationale Anmeldenummer: PCT/EP2019/059164
(87) Internationale Veröffentlichungsnummer: WO 2019/223931

(56) Entgegenhaltungen:
- EP-A1- 3 109 115
- EP-A1- 3 276 587
- DE-A1-102012 016 802
- DE-A1-102014 221 473
- DE-A1-102015 008 879

## Beschreibung

Die Erfindung betrifft ein Verfahren zum Steuern eines zur Durchführung eines automatisierten Fahrbetriebs eingerichteten Fahrzeugsystems eines Fahrzeugs nach den Merkmalen des Anspruchs 1 und eine Vorrichtung zur Durchführung des Verfahrens.

Aus dem Stand der Technik ist, wie in der DE 10 2014 014 120 A1 beschrieben, eine Funktionsfreigabe einer hochautomatisierten Fahrfunktion bekannt. In einem Verfahren zum autonomen Betreiben eines Fahrzeugs auf einer vorausliegenden Fahrstrecke wird der autonome Betrieb des Fahrzeugs nur dann zugelassen, wenn für eine vorgegebene Streckenlänge der vorausliegenden Fahrstrecke eine Bedingung erfüllt ist oder mehrere Bedingungen erfüllt sind. Die Bedingungen sind, dass auf mindestens einer Seite einer aktuellen Fahrbahn des Fahrzeugs eine bauliche Trennung vorhanden ist, dass eine Fahrspur des Fahrzeugs eine Mindestspurbreite aufweist, dass keine die Reichweite von Umgebungserfassungssensoren wesentlich einschränkenden Kuppen und Senken vorhanden sind, dass die Anzahl der Fahrspuren sich nicht ändert, dass keine Tunnel vorhanden sind, dass kein Gebäude auf der Fahrbahn vorhanden sind, dass kein Autobahnkreuz vorhanden ist, dass ein Krümmungsradius der Fahrspur des Fahrzeugs größer ist als ein vorgegebener Grenzwert, dass keine Verkehrsstörung vorliegt, dass keine Verkehrsmeldung über Gefahrensituationen vorliegt und dass keine Verkehrsmeldung über das Vorhandensein von Baustellen vorliegt.

In der DE 10 2016 009 117 A1 wird ein Verfahren zur Lokalisierung eines Fahrzeugs beschrieben. Eine umgebungserfassungsbasierte Lokalisierung und eine Lokalisierung mittels eines globalen Navigationssatellitensystems werden miteinander fusioniert.

Aus der US 2011/0118979 A1 ist ein Verfahren zum Betreiben eines Kraftfahrzeugortungssystems bekannt. Das Verfahren umfasst das Bereitstellen einer rechtzeitigen Warnung, wenn das System vorbestimmte Leistungskriterien nicht erfüllen kann. Das Verfahren umfasst das Ermitteln einer satellitenbasierten Positionsschätzung, das Ermitteln einer Koppelnavigationspositionsschätzung, das Bestimmen einer Lokalisierungsschätzung durch Kombinieren der satellitenbasierten Positionsschätzung und der Koppelnavigationspositionsschätzung, das Bestimmen einer mit einer Karte übereinstimmenden Position und das Bestimmen einer Integrität der Lokalisierungsschätzung durch Vergleichen einer Teststatistik, die durch Bewerten der Bestimmung der mit der Karte übereinstimmenden Position und der Lokalisierungsschätzung mit einem Entscheidungsschwellenwert basierend auf einer vorbestimmten Lokalisierungsschätzungsgenauigkeitsspezifikation berechnet wird. Wenn die Teststatistik kleiner als der Entscheidungsschwellenwert ist, stellt das System die Lokalisierungsschätzung bereit. Wenn die Teststatistik größer als der Entscheidungsschwellenwert ist, liefert das System einen Hinweis, dass die Integrität der Lokalisierungsschätzung die vorbestimmte Lokalisierungsschätzungsgenauigkeitsspezifikation nicht erfüllt

Die DE 10 2012 016 802 A1 offenbart ein Verfahren zur Steuerung eines zum autonomen Betrieb eines Kraftfahrzeugs ausgebildeten Fahrzeugsystems, wobei aus einer Ortsinformation und wenigstens einer ortsbezogenen Erlaubnisinformation eine Einstellinformation für das Fahrzeugsystem ermittelt wird.

Der Erfindung liegt die Aufgabe zu Grunde, ein gegenüber dem Stand der Technik verbessertes Verfahren zum Steuern eines zur Durchführung eines automatisierten Fahrbetriebs eingerichteten Fahrzeugsystems eines Fahrzeugs und eine Vorrichtung zur Durchführung des Verfahrens anzugeben.

Die Aufgabe wird erfindungsgemäß gelöst durch ein Verfahren zum Steuern eines zur Durchführung eines automatisierten Fahrbetriebs eingerichteten Fahrzeugsystems eines Fahrzeugs mit den Merkmalen des Anspruchs 1 und eine Vorrichtung zur Durchführung des Verfahrens mit den Merkmalen des Anspruchs 9.

Vorteilhafte Ausgestaltungen der Erfindung sind Gegenstand der Unteransprüche.

In einem Verfahren zum Steuern eines zur Durchführung eines automatisierten, insbesondere hochautomatisierten oder autonomen, Fahrbetriebs eingerichteten Fahrzeugsystems eines Fahrzeugs wird das Fahrzeug lokalisiert und das Fahrzeugsystem wird in Abhängigkeit von einem Ergebnis der Lokalisierung zur Aktivierung freigegeben, d. h. in Abhängigkeit vom jeweiligen Ergebnis der Lokalisierung wird das Fahrzeugsystem entweder zur Aktivierung freigegeben oder es wird nicht zur Aktivierung freigegeben.

Erfindungsgemäß wird das Fahrzeug mit mindestens zwei unterschiedlichen Lokalisierungsmethoden lokalisiert, wobei die mindestens zwei Lokalisierungsmethoden zumindest eine landmarkenbasierte Lokalisierungsmethode und eine GNSS-basierte Lokalisierungsmethode, d. h. eine auf mindestens einem globalen Navigationssatellitensystem (Global Navigation Satellite System) basierende Lokalisierungsmethode, umfassen, insbesondere eine DGNSS-basierte Lokalisierungsmethode, d. h. eine auf mindestens einem differentiellen globalen Navigationssatellitensystem (Differential Global Navigation Satellite System) basierende Lokalisierungsmethode. Das Fahrzeugsystem wird nur dann zur Aktivierung freigegeben, wenn mit jeder der angewendeten Lokalisierungsmethoden bestätigt wird, dass das Fahrzeug sich auf einem für den automatisierten Fahrbetrieb freigegebenen Streckenabschnitt befindet.

Eine erfindungsgemäße Vorrichtung zur Durchführung dieses Verfahrens ist insbesondere dazu eingerichtet, dieses Verfahren durchzuführen. Sie ist dazu eingerichtet, das Fahrzeug zu lokalisieren und das Fahrzeugsystem in Abhängigkeit von einem Ergebnis der Lokalisierung zur Aktivierung freizugeben, wobei sie dazu eingerichtet ist, das Fahrzeug mit mindestens zwei unterschiedlichen Lokalisierungsmethoden zu lokalisieren, wobei die mindestens zwei Lokalisierungsmethoden zumindest eine landmarkenbasierte Lokalisierungsmethode und eine auf mindestens einem globalen Navigationssatellitensystem basierende Lokalisierungsmethode umfassen,
und wobei sie dazu eingerichtet ist, das Fahrzeugsystem nur dann zur Aktivierung freizugeben, wenn mit jeder der angewendeten Lokalisierungsmethoden bestätigt wird, dass das Fahrzeug sich auf einem für den automatisierten Fahrbetrieb freigegebenen Streckenabschnitt befindet.

Durch das erfindungsgemäße Verfahren sowie die erfindungsgemäße Vorrichtung zu dessen Durchführung wird sichergestellt, dass sich das Fahrzeug auf einem für den automatisierten Fahrbetrieb freigegebenen Streckenabschnitt befindet. Dadurch werden beispielsweise Vorschriften, insbesondere gesetzliche Vorschriften, zur Durchführung des automatisierten Fahrbetriebs erfüllt, beispielsweise die Anforderungen für automatisierte Fahrfunktionen der SAE-Stufe 3 (Conditional Automation). Die Anforderungen an eine Falsch-Positiv-Rate dieser Prüfung, ob sich das Fahrzeug auf einem für den automatisierten Fahrbetrieb freigegebenen Streckenabschnitt befindet, sind aufgrund möglicher fataler Auswirkungen einer unerlaubten Aktivierung des automatisierten Fahrbetriebs beispielsweise so streng, dass sowohl redundante als auch integritätsüberwachte Mechanismen und zudem beispielsweise auch die Sicherstellung der korrekten Position des Fahrzeugs über zwei voneinander unabhängige Lokalisierungsverfahren notwendig sind. Dies wird mittels der erfindungsgemäßen Lösung sichergestellt.

Die erfindungsgemäße Lösung ermöglicht insbesondere eine straßengenaue Verortung mit einer sichergestellten äußerst geringen Restfehlerrate, beispielsweise in der Größenordnung von ASIL-D-Ausfallraten und besser. Damit werden auch sehr anspruchsvolle SAE-Level-3-Fahrzeugsysteme ermöglicht und zertifizierbar, bei denen eine fehlerhafte Aktivierung sofort schlimmste Auswirkungen hätte, beispielsweise ein Autobahnpilot bei höheren Geschwindigkeiten.

Die erfindungsgemäße Lösung kombiniert insbesondere zwei vollständig unabhängige integre Lokalisierungsverfahren zur Sicherstellung einer straßengenauen Verortung des Fahrzeugs. Zum einen wird beispielswiese mit einem DGNSS-Integritätsmonitor, zum Beispiel RAIM (Receiver Autonomous Monitoring), ein laterales Protection Limit, d. h. eine garantierte Fehlerobergrenze, berechnet. Zum anderen wird insbesondere eine hochgenaue Karte herangezogen, in der ortsreferenzierte Landmarken verzeichnet sind sowie eine Fahrzeugsensorik des Fahrzeugs, welche diese in der realen Welt beobachten kann. Ein ebenfalls integres Verfahren erstellt auf beiden Seiten, d. h. auf Seite der Karte und auf Seite der Fahrzeugsensoriksicht, jeweils eine hinreichend verwechslungssichere Signatur aus diesen Landmarken, und gleicht diese miteinander ab. Wie bei Verfahren wie RAIM kann dabei eine maximale Falsch-Positiv-Rate mathematisch garantiert werden.

Beispielsweise werden bei der landmarkenbasierten Lokalisierungsmethode durch Vergleichen von sensorisch ermittelten Landmarkensignaturen mit aus einer, insbesondere hochauflösenden, digitalen Karte entnommenen Landmarkensignaturen eine wahrscheinlichste Position des Fahrzeugs in der digitalen Karte und ein Ähnlichkeitsmaß der Signaturübereinstimmung ermittelt. Eine Bestätigung, dass das Fahrzeug sich auf einem für den automatisierten Fahrbetrieb freigegebenen Streckenabschnitt befindet, wird vorteilhafterweise nur dann ausgegeben, wenn die ermittelte wahrscheinlichste Position sich auf diesem für den automatisierten Fahrbetrieb freigegebenen Streckenabschnitt befindet und wenn zudem das ermittelte Ähnlichkeitsmaß eine vorgegebene Ähnlichkeitsschwelle überschreitet. Dadurch wird die Wahrscheinlichkeit einer fehlerhaften Lokalisierung erheblich reduziert.

Beispielsweise wird die ermittelte wahrscheinlichste Position mit einer satellitengestützt ermittelten Position, d. h. mit einer mittels der auf dem mindestens einen globalen Navigationssatellitensystem basierenden Lokalisierungsmethode ermittelten Position, verglichen und insbesondere nur dann als plausibel bewertet, wenn die beiden ermittelten Positionen nahe beieinander liegen, insbesondere innerhalb eines vorgegebenen Maximalabstandes zueinander liegen. Andernfalls wird die ermittelte wahrscheinlichste Position als unplausibel verworfen. Dadurch wird eine Plausibilitätsprüfung der Lokalisierung durchgeführt, so dass eine Freigabe zur Aktivierung des automatisierten Fahrbetriebs bei einer unplausiblen Lokalisierung verhindert wird. Eine Bestätigung, dass das Fahrzeug sich auf einem für den automatisierten Fahrbetrieb freigegebenen Streckenabschnitt befindet, wird daher vorteilhafterweise nur dann ausgegeben, wenn die ermittelte wahrscheinlichste Position als plausibel bewertet worden ist.

Beispielsweise wird bei der GNSS-basierten Lokalisierungsmethode, d. h. bei der auf dem mindestens einen globalen Navigationssatellitensystem basierenden Lokalisierungsmethode, eine aktuelle Position des Fahrzeugs (GNSS-Position) satellitengestützt ermittelt, eine Fehlerobergrenze (Protection Limit PL) für die erwartete Abweichung einer tatsächlichen Fahrzeugposition von der ermittelten aktuellen Position des Fahrzeugs wird ermittelt und eine Sollgrenze (Alert Limit AL) wird derart definiert, dass ein von der Sollgrenze umfasster Bereich keine Bereiche von benachbarten Straßen umfasst. Eine Bestätigung, dass das Fahrzeug sich auf einem für den automatisierten Fahrbetrieb freigegebenen Streckenabschnitt befindet, wird vorteilhafterweise nur dann ausgegeben, wenn die ermittelte Fehlerobergrenze innerhalb des von der Sollgrenze umfassten Bereichs liegt. Dadurch wird insbesondere verhindert, dass eine Freigabe zur Aktivierung des automatisierten Fahrbetriebs erfolgt, wenn sich das Fahrzeug nicht auf dem freigegebenen Streckenabschnitt, sondern auf einer benachbarten Straße befindet, beispielsweise nicht auf einem Streckenabschnitt einer Autobahn, welcher für den automatisierten Fahrbetrieb freigegeben ist, sondern auf einem parallel dazu verlaufenden Streckenabschnitt einer benachbarten Landstraße, welcher nicht für den automatisierten Fahrbetrieb freigegeben ist.

Für die GNSS-basierte Lokalisierungsmethode, d. h. für die auf dem mindestens einen globalen Navigationssatellitensystem basierende Lokalisierungsmethode, wird beispielsweise RAIM (Receiver Autonomous Monitoring) verwendet. Dies ist ein aus der Luftfahrttechnik bekanntes Verfahren zur Beurteilung der Integrität (Maß des Vertrauens, das man in die ermittelte GNSS-Position setzen kann) einer ermittelten GNSS-Position. RAIM beruht auf der Tatsache, dass man für die satellitengestützte Lokalisierung Signale von vier Satelliten benötigt, und dass man, wenn mehr als vier Satelliten verfügbar sind, eine Grenze (Fehlerobergrenze (Protection Limit PL)) um einen Lokalisierungspunkt (GNSS-Position) definieren kann, die die tatsächliche Position mit hoher Sicherheit enthält.

Die Sollgrenze (Alert Limit), die um die aktuell ermittelte GNSS-Position des Fahrzeugs gelegt wird, legt fest, in welchem Bereich sich das Fahrzeug tatsächlich befinden muss, wenn der Feststellung, dass das Fahrzeug sich auf einem für den automatisierten Fahrbetrieb freigegebenen Streckenabschnitt befindet, vertraut werden soll. Wenn die Fehlerobergrenze (Protection Limit PL) kleiner als die Sollgrenze (Alert Limit) ist, liegt die tatsächliche Position des Fahrzeugs mit hoher Sicherheit auf einem für den automatisierten Fahrbetrieb freigegebenen Streckenabschnitt. Wenn die Fehlerobergrenze (Protection Limit PL) hingegen größer ist als die Sollgrenze (Alert Limit), kann nicht ausgeschlossen werden, dass das Fahrzeug sich auf einem nicht für den automatisierten Fahrbetrieb freigegebenen Streckenabschnitt, obwohl die ermittelte GNSS-Position sich auf einem für den automatisierten Fahrbetrieb freigegebenen Streckenabschnitt befindet. In diesem Fall ist das Lokalisierungsergebnis unsicher und wird daher bei der Entscheidung, ob der automatisierte Fahrbetrieb zugelassen werden soll, nicht berücksichtigt. D. h. das Fahrzeugsystem zur Durchführung des automatisierten Fahrbetriebs wird dann nicht zur Aktivierung freigegeben.

Beispielsweise wird für die landmarkenbasierte Lokalisierungsmethode von einem fahrzeugexternen Server ein Kartenausschnitt der digitalen Karte heruntergeladen, welcher einer aktuellen Position des Fahrzeugs zugeordnet ist, die mittels der auf dem mindestens einen globalen Navigationssatellitensystem basierenden Lokalisierungsmethode ermittelt wurde. Dadurch wird die Verwendung einer hochauflösenden digitalen Karte ermöglicht, welche sehr viele Detailinformationen enthält und dadurch einen großen Speicherplatz und Verarbeitungsaufwand erfordert. Der erforderliche Speicherplatz im Fahrzeug und der erforderliche Verarbeitungsaufwand werden reduziert, indem nicht die gesamte digitale Karte im Fahrzeug gespeichert wird und verarbeitet wird, sondern indem jeweils nur ein relevanter Kartenausschnitt der digitalen Karte heruntergeladen wird.

Bei der landmarkengestützten Lokalisierung wird somit die aktuelle (ungenaue) Position des Fahrzeugs satellitengestützt ermittelt und von fahrzeugexternen Server wird der der aktuellen Position zugeordneter Kartenausschnitt der insbesondere hochauflösenden digitalen Karte (HAD map) heruntergeladen. Aus der digitalen Karte werden Landmarkensignaturen extrahiert. Mit der Fahrzeugsensorik werden Landmarkensignaturen sensorisch erfasst. Für die ermittelten Landmarkensignaturen werden eine Vielzahl von Positionshypothesen erstellt, die die Position des Fahrzeugs repräsentieren. Durch Vergleichen der Positionshypothesen wird geprüft, welche der Hypothesen sich am ähnlichsten sind. Da wo sich die ähnlichen Hypothesen häufen, liegt die der wahrscheinlichsten Position entsprechende Positionshypothese. Aus der Verteilung der Häufung kann man entnehmen, wie ähnlich die Landmarkensignaturen sind und mit welcher Sicherheit man davon ausgehen kann, dass die ermittelte wahrscheinlichste Position der tatsächlichen Position entspricht.

Die Vorrichtung zur Durchführung des Verfahrens umfasst insbesondere mindestens einen Empfänger für Signale mindestens eines globalen Navigationssatellitensystems und eine Fahrzeugsensorik, insbesondere umfassend mindestens einen Sensor oder eine Mehrzahl gleicher und/oder verschiedener Sensoren, zum Erfassen von Landmarkensignaturen. Des Weiteren umfasst die Vorrichtung insbesondere mindestens eine digitale Karte und/oder mindestens eine Kommunikationsschnittstelle zur Kommunikation mit einem fahrzeugexternen Server zum Herunterladen mindestens eines Kartenausschnitts der digitalen Karte. Zudem umfasst die Vorrichtung insbesondere mindestens eine Verarbeitungseinheit, insbesondere zur Durchführung einer oder mehrerer oder aller der oben genannten Verfahrensweisen. Dadurch ist vorteilhafterweise das oben beschriebene Verfahren mit allen seinen Ausprägungen durchführbar und die sich daraus ergebenden Vorteile können erzielt werden.

Ausführungsbeispiele der Erfindung werden im Folgenden anhand von Zeichnungen näher erläutert.

Dabei zeigen:
- Fig. 1: schematisch eine fehlerhafte Lokalisierung eines Fahrzeugs,
- Fig. 2: schematisch ein Verfahrensablauf einer Lokalisierung eines Fahrzeugs,
- Fig. 3: schematisch eine auf mindestens einem globalen Navigationssatellitensystem basierende Lokalisierungsmethode,
- Fig. 4: schematisch eine landmarkenbasierte Lokalisierungsmethode,
- Fig. 5: schematisch ein Vergleich von Landmarkenobjekten aus Sensordaten mit Landmarkenobjekten einer Karte,
- Fig. 6: schematisch eine probabilistische Analyse,
- Fig. 7: schematisch eine Einbindung von Informationen,
- Fig. 8: schematisch eine Plausibilisierung einer Lokalisierung,
- Fig. 9: schematisch eine tatsächliche Verteilung von Fehlern,
- Fig. 10: schematisch eine angenommene Verteilung von Fehlern, und
- Fig. 11: schematisch eine Vorrichtung zur Durchführung eines Verfahrens zum Steuern eines zur Durchführung eines automatisierten Fahrbetriebs eingerichteten Fahrzeugsystems eines Fahrzeugs.

Einander entsprechende Teile sind in allen Figuren mit den gleichen Bezugszeichen versehen.

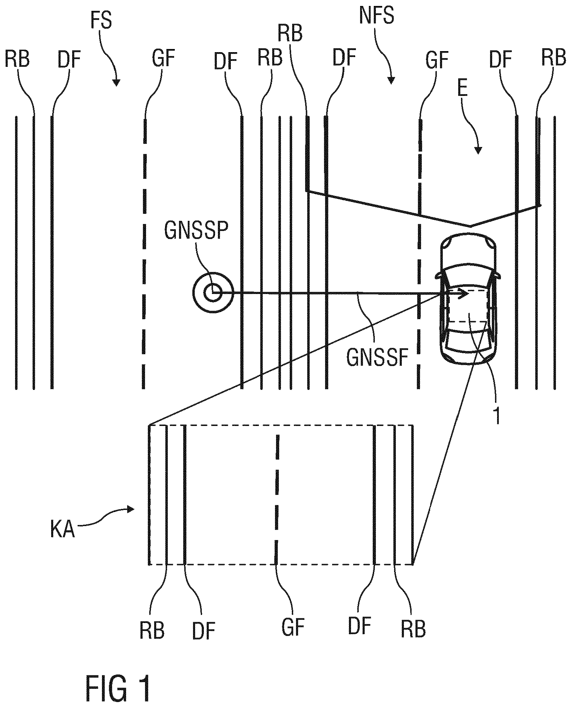

Anhand der Figuren 1 bis 11 werden im Folgenden ein Verfahren zum Steuern eines zur Durchführung eines automatisierten, insbesondere hochautomatisierten oder autonomen, Fahrbetriebs eingerichteten Fahrzeugsystems 9 eines Fahrzeugs 1 und eine Vorrichtung 2 zur Durchführung dieses Verfahrens beschrieben. Ein solcher automatisierte Fahrbetrieb, insbesondere hochautomatisierter Fahrbetrieb (HAF), soll nur möglich sein, wenn bestimmte Bedingungen erfüllt sind.

Eine der Bedingungen ist, dass ein Streckenabschnitt FS einer Straße, auf der sich das Fahrzeug 1 befindet, für den automatisierten Fahrbetrieb freigegeben ist. Wenn das Fahrzeug 1 sich auf einem Streckenabschnitt NFS befindet, der für den automatisierten Fahrbetrieb nicht freigegeben ist, soll es einem Fahrzeugführer nicht möglich sein, das Fahrzeugsystem 9 zur Durchführung des automatisierten Fahrbetriebs zu aktivieren. Die entsprechende Fahrfunktion ist dann gesperrt.

Das im Folgenden näher beschriebene Verfahren soll somit sicherstellen, dass das Fahrzeugsystem 9 zur Durchführung des automatisierten Fahrbetriebs auf Streckenabschnitten NFS, die für den automatisierten Fahrbetrieb nicht freigegeben sind, nicht aktivierbar ist. Für die Aktivierung des Fahrzeugsystem 9 zur Durchführung des automatisierten Fahrbetriebs muss somit zumindest geprüft werden, ob das Fahrzeug 1 sich auf einem Streckenabschnitt FS befindet, der für den automatisierten Fahrbetrieb freigegeben ist (Streckenfreigabe), und das Fahrzeugsystem 9 zur Durchführung des automatisierten Fahrbetriebs muss abhängig von diesem Prüfergebnis zur Aktivierung freigegeben oder gesperrt werden.

Eine Information über die Freigabe des jeweiligen Streckenabschnitts FS für den automatisierten Fahrbetrieb kann dabei beispielsweise als ein Attribut einer Straße aus einer digitalen Karte 5 entnommen werden, oder sie kann von einem Server 7 für eine vorausliegende Strecke abgerufen werden, oder sie kann, wie in der DE 102014 014 120 A1 beschrieben, in Abhängigkeit von verschiedenen Merkmalen der Straße, zum Beispiel Autobahn oder autobahnähnliche Straße mit baulich getrennten Richtungsfahrbahnen, und in Abhängigkeit von einem Verkehrsgeschehens, zum Beispiel kein Stau, keine Baustellen usw., ermittelt werden.

Dazu ist es jedenfalls erforderlich, zuverlässig festzustellen, auf welchem Streckenabschnitt FS, NFS sich das Fahrzeug 1 befindet. Eine Gefahr dabei ist, dass eine Lokalisierung mittels eines globalen Navigationssatellitensystems (GNSS) und durch Vergleichen von Straßenmerkmalen, die aus einer digitalen Karte 5 entnommen werden, mit korrespondierenden Straßenmerkmalen, die sensorisch ermittelt werden, möglicherweise ein falsches Ergebnis liefert, wie in Figur 1 gezeigt und im Folgenden noch näher beschrieben wird. Dies kann möglicherweise fatale Konsequenzen haben, denn bei einer falschen Lokalisierung des Fahrzeugs 1 kann der automatisierte Fahrbetrieb möglicherweise auf einem Streckenabschnitt NFS aktiviert werden, welcher hierfür nicht freigegeben ist und auf welchem beispielsweise Verkehrssituationen auftreten können, für welche das Fahrzeugsystem 9 zur Durchführung des automatisierten Fahrbetriebs nicht ausgelegt ist, zum Beispiel Gegenverkehr, kreuzender Verkehr, Fußgänger und Radfahrer.

Das im Folgenden näher beschriebene Verfahren ermöglicht eine Lokalisierung des Fahrzeugs 1 derart, dass mit hoher Zuverlässigkeit festgestellt werden kann, ob das Fahrzeug 1 sich auf einem bestimmten Streckenabschnitt FS, NFS, insbesondere auf einem Streckenabschnitt FS, der für den automatisierten Fahrbetrieb freigegeben ist, befindet. Beispielsweise liegen Falsch-Positiv-Raten des Verfahrens auf Niveau von ASIL-D-Anforderungen, zum Beispiel 10⁻⁷ bis 10⁻⁹ Falsch-Positiv-Erkennungen pro Stunde.

Bei einer Positiv-Erkennung soll geprüft werden, ob das Fahrzeug 1 sich auf einem Streckenabschnitt FS befindet, der für den automatisierten Fahrbetrieb freigegeben ist. Die Prüfung ergibt, dass das Fahrzeug 1 sich auf diesem Streckenabschnitt FS befindet, und das Fahrzeug 1 befindet sich auch tatsächlich auf diesem Streckenabschnitt FS. Bei einer Falsch-Positiv-Erkennung (False Positive) soll geprüft werden, ob das Fahrzeug 1 sich auf einem Streckenabschnitt FS befindet, der für den automatisierten Fahrbetrieb freigegeben ist. Die Prüfung ergibt, dass das Fahrzeug 1 sich auf diesem Streckenabschnitt FS befindet. Tatsächlich befindet sich das Fahrzeug 1 jedoch auf einem anderen Streckenabschnitt NFS, insbesondere auf einem Streckenabschnitt NFS, der nicht für den automatisierten Fahrbetrieb freigegeben ist.

Beispielsweise basiert das Fahrzeugsystem 9 auf einer, insbesondere hochauflösenden, digitalen Karte 5, um einen sicheren automatisierten Fahrbetrieb sicherzustellen. Es muss dann sichergestellt werden, dass die korrekte digitale Karte 5 oder ein korrekter Kartenausschnitt KA dieser digitalen Karte 5 verwendet wird, welcher dem Streckenabschnitt FS entspricht, auf welchem das Fahrzeug 1 fährt. Es muss somit nicht nur sichergestellt werden, dass sich das Fahrzeug 1 auf einem Streckenabschnitt FS, zum Beispiel auf einer Autobahn, befindet, der grundsätzlich für den automatisierten Fahrbetrieb geeignet wäre, sondern dass sich das Fahrzeug 1 auf dem korrekten Streckenabschnitt FS befindet. Diese Funktion wird als Road Path Integrity Monitoring bezeichnet.

Während des automatisierten Fahrbetriebs benötigt das Fahrzeug 1 detaillierte Kenntnisse einer vorausliegenden Strecke, um Fahrmanöver entsprechend zu planen. Entsprechende Informationen einer Fahrzeugsensorik 4 sind jedoch in ihrer Reichweite beschränkt. Daher werden Umgebungsinformationen durch die, insbesondere hochauflösende, digitale Karte 5 zur Verfügung gestellt. Hierzu muss das Fahrzeug 1 jedoch korrekt in der digitalen Karte 5 lokalisiert werden. Ein lokal begrenzter Kartenausschnitt KA dieser digitalen Karte 5, auch als Horizont oder Kartenhorizont bezeichnet, wird im Fahrzeug 1 bereitgehalten. Zusammen mit der Position des Fahrzeugs 1 stellt der Kartenausschnitt KA ein Umgebungsmodell bereit, um die sensorische Wahrnehmung zu unterstützen. Dieser Kartenausschnitt KA wird insbesondere basierend auf einer satellitengestützt ermittelten Position GNSSP des Fahrzeugs 1 ausgewählt.

Figur 1 zeigt, wie bereits erwähnt, eine Lokalisierung des Fahrzeugs 1, welche ein falsches Ergebnis liefert. Dargestellt ist ein Streckenabschnitt FS, beispielsweise einer Autobahn, welcher für den automatisierten Fahrbetrieb freigegeben ist, und daneben ein Streckenabschnitt NFS, welcher nicht für den automatisierten Fahrbetrieb freigegeben ist, beispielsweise eine Bundesstraße oder eine Servicestraße der Autobahn, welche neben der Autobahn verläuft.

Das Fahrzeug 1 befindet sich tatsächlich auf dem Streckenabschnitt NFS, welcher nicht für den automatisierten Fahrbetrieb freigegeben ist. Mittels einer auf mindestens einem globalen Navigationssatellitensystem basierende Lokalisierungsmethode LMG wird eine Position GNSSP des Fahrzeugs 1 ermittelt, welche sich auf dem links daneben befindlichen für den automatisierten Fahrbetrieb freigegebenen Streckenabschnitt FS befindet. Solche Fehllokalisierungen GNSSF sind nicht unüblich.

Mittels der Fahrzeugsensorik 4 ermittelte Straßenmerkmale des nicht für den automatisierten Fahrbetrieb freigegebenen Streckenabschnitts NFS, die in einem Erfassungsbereich E der Fahrzeugsensorik 4 liegen, beispielsweise Fahrspurmarkierungen DF, GF, Arten der Fahrspurmarkierungen, hier gestrichelte Fahrspurmarkierungen GF und durchgezogene Fahrspurmarkierungen DF, Anzahl der Fahrspuren, Distanzen zu Randbegrenzungen RB, und aus dem Kartenausschnitt KA der digitalen Karte 5 ermittelte Straßenmerkmale des daneben befindlichen für den automatisierten Fahrbetrieb freigegebenen Streckenabschnitts FS passen im dargestellten Beispiel zueinander, obwohl das Fahrzeug 1 sich tatsächlich nicht auf dem für den automatisierten Fahrbetrieb freigegebenen Streckenabschnitt FS befindet. Es gibt viele derartige Szenarien auf der Welt, bei welchen solche Fehler auftreten können. Die Konsequenz dieser fehlerhaften Lokalisierung ist, dass sich der automatisierte Fahrbetrieb dann auch auf dem Streckenabschnitt NFS aktivieren lässt, der nicht für den automatisierten Fahrbetrieb freigegeben ist.

Derartige Fehler, bedingt durch fehlerhafte Lokalisierungen, werden mit dem im Folgenden beschriebenen Verfahren vermieden. In diesem Verfahren zum Steuern des zur Durchführung des automatisierten, insbesondere hochautomatisierten oder autonomen, Fahrbetriebs eingerichteten Fahrzeugsystems 9 des Fahrzeugs 1 wird das Fahrzeug 1 lokalisiert und das Fahrzeugsystem 9 wird in Abhängigkeit von einem Ergebnis der Lokalisierung zur Aktivierung freigegeben, d. h. in Abhängigkeit vom jeweiligen Ergebnis der Lokalisierung wird das Fahrzeugsystem 9 entweder zur Aktivierung freigegeben oder es wird nicht zur Aktivierung freigegeben.

Das Fahrzeug 1 wird mit mindestens zwei unterschiedlichen Lokalisierungsmethoden LML, LMG lokalisiert, wobei die mindestens zwei Lokalisierungsmethoden LML, LMG zumindest eine landmarkenbasierte Lokalisierungsmethode LML und eine GNSS-basierte Lokalisierungsmethode, d. h. die auf mindestens einem globalen Navigationssatellitensystem (Global Navigation Satellite System) basierende Lokalisierungsmethode LMG, umfassen, insbesondere eine DGNSS-basierte Lokalisierungsmethode, d. h. eine auf mindestens einem differentiellen globalen Navigationssatellitensystem (Differential Global Navigation Satellite System) basierende Lokalisierungsmethode LMG. Das Fahrzeugsystem 9 wird nur dann zur Aktivierung freigegeben, wenn mit jeder der angewendeten Lokalisierungsmethoden LML, LMG bestätigt wird, dass das Fahrzeug 1 sich auf einem für den automatisierten Fahrbetrieb freigegebenen Streckenabschnitt FS befindet.

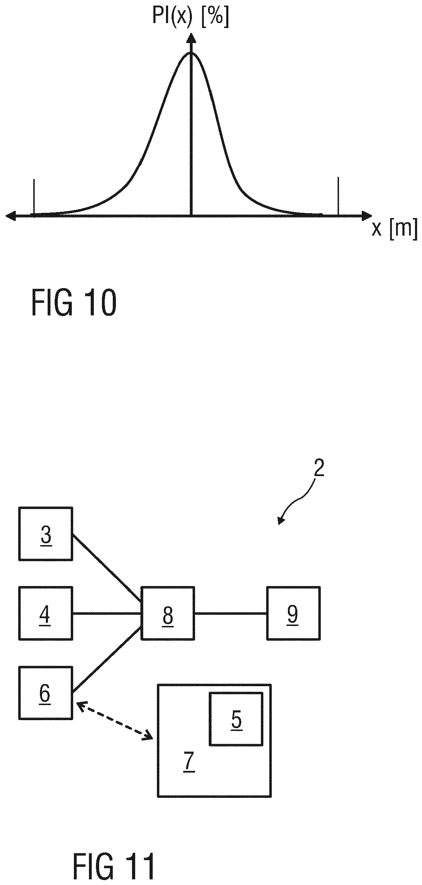

Die in Figur 11 dargestellte Vorrichtung 2 zur Durchführung dieses Verfahrens ist insbesondere dazu eingerichtet, dieses Verfahren durchzuführen.

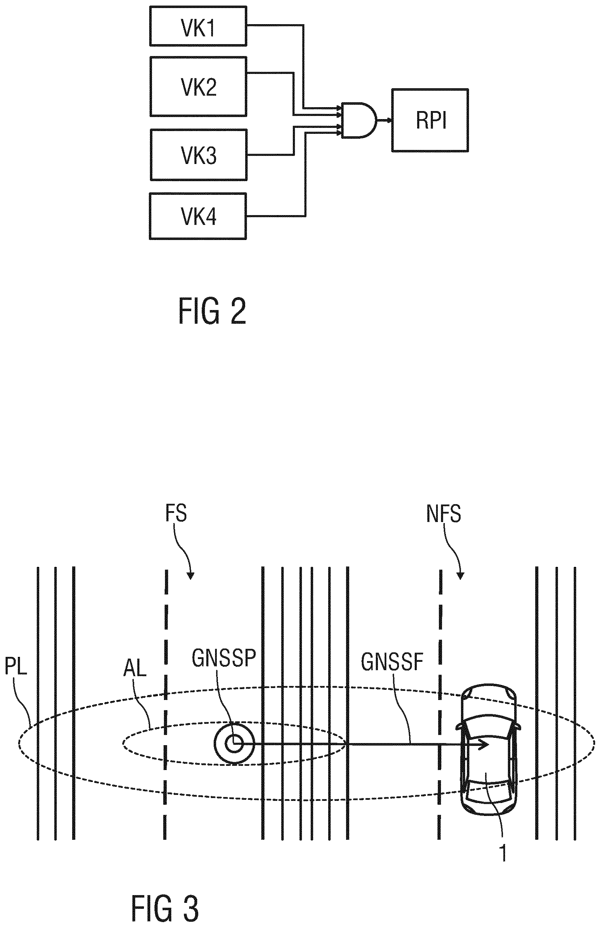

Das Verfahren und die Vorrichtung 2 verwenden somit, wie in Figur 2 gezeigt, ein Lokalisierungsverfahren mit einer Kombination komplementärer Mechanismen, um zu verifizieren, dass sich das Fahrzeug 1 tatsächlich dort befindet, wo es durch die Lokalisierungsmethoden LML, LMG lokalisiert wird, so dass mit einer hohen Sicherheit beurteilt werden kann, ob sich das Fahrzeug 1 auf einem für den automatisierten Fahrbetrieb freigegebenen Streckenabschnitt FS befindet oder nicht. Bei der auf mindestens einem globalen Navigationssatellitensystem basierenden Lokalisierungsmethode LMG wird eine geschützte seitliche Fehlerüberschreitung berücksichtigt, wie im Folgenden noch beschrieben wird. Bei der landmarkenbasierten Lokalisierungsmethode LML wird eine schlüssige Übereinstimmung von Landmarkensignaturen, welche einerseits mittels der Fahrzeugsensorik 4 erfasst wurden und andererseits in der digitalen Karte 5 enthalten sind, entlang einer Wegstrecke xF, die vom Fahrzeug 1 passiert wird, ermittelt. Es wird zudem eine Plausibilisierung der mittels der auf mindestens einem globalen Navigationssatellitensystem basierenden Lokalisierungsmethode LMG ermittelten Position GNSSP, insbesondere Längsposition, mit der mittels der landmarkenbasierten Lokalisierungsmethode LML ermittelten wahrscheinlichsten Position WP, insbesondere Längsposition, durchgeführt. Es wird zudem geprüft, ob seitliche Streckenprofile, insbesondere ein Streckenquerschnittprofil, aus der digitalen Karte 5 und von der Fahrzeugsensorik 4 erfasste seitliche Streckenprofile, insbesondere ein von der Fahrzeugsensorik 4 erfasstes Streckenquerschnittsprofil, übereinstimmen, aber solche Übereinstimmungen sind sehr verbreitet und insbesondere nicht stochastisch.

Figur 2 zeigt einen Verfahrensablauf dieses Lokalisierungsverfahrens. Das Lokalisierungsverfahren umfasst als eine Verfahrenskomponente VK1 die Überprüfung, ob das mittels der Fahrzeugsensorik 4 erfasste Streckenquerschnittsprofil und das Streckenquerschnittsprofil aus der digitalen Karte 5 übereinstimmen. Das Streckenquerschnittsprofil ist ein Satz lateraler Abstände zwischen allen Randbegrenzungen RB und allen Fahrspurmarkierungen DF, GF sowie eine Reihenfolge von Fahrspurmarkierungstypen.

Des Weiteren wird als weitere Verfahrenskomponente VK2 die auf mindestens einem globalen Navigationssatellitensystem basierende Lokalisierungsmethode LMG durchgeführt, wobei überprüft wird, ob eine laterale Fehlerobergrenze PL klein genug ist, um einen konkurrierenden Streckenabschnitt FS, NFS auszuschließen, so dass keine falsche Lokalisierung auf einem benachbarten Streckenabschnitt FS, NFS möglich ist.

Zudem wird als weitere Verfahrenskomponente VK3 die landmarkenbasierte Lokalisierungsmethode LML durchgeführt, und als weitere Verfahrenskomponente VK4 wird überprüft, ob die ermittelte Längsposition plausibel ist. Wenn alle diese Verfahrenskomponenten VK1, VK2, VK3, VK4 ein positives Ergebnis liefern, ist die Road Path Integrity gegeben, d. h. die Lokalisierung ist mit großer Sicherheit korrekt, so dass eine Lokalisierungsintegrität RPI vorhanden ist. Auf Basis dieser Lokalisierung steht somit fest, ob sich das Fahrzeug 1 auf einem für den automatisierten Fahrbetrieb freigegebenen Streckenabschnitt FS befindet, so dass das Fahrzeugsystem 9 zur Aktivierung freigegeben wird, oder ob dies nicht der Fall ist, so dass das Fahrzeugsystem 9 nicht zur Aktivierung freigegeben wird.

Bei der GNSS-basierten Lokalisierungsmethode als zweite Verfahrenskomponente VK2, d. h. bei der auf dem mindestens einen globalen Navigationssatellitensystem basierenden Lokalisierungsmethode LMG, wird, wie in Figur 3 gezeigt, die Position GNSSP des Fahrzeugs 1 (GNSS-Position) satellitengestützt ermittelt, eine Fehlerobergrenze PL für die erwartete Abweichung einer tatsächlichen Fahrzeugposition von der ermittelten Position GNSSP des Fahrzeugs 1 wird ermittelt und eine Sollgrenze AL wird derart definiert, dass ein von der Sollgrenze AL umfasster Bereich keine Bereiche von benachbarten Straßen umfasst. Eine Bestätigung, dass das Fahrzeug 1 sich auf einem für den automatisierten Fahrbetrieb freigegebenen Streckenabschnitt FS befindet, wird nur dann ausgegeben, wenn die ermittelte Fehlerobergrenze PL innerhalb des von der Sollgrenze AL umfassten Bereichs liegt.

Für die GNSS-basierte, insbesondere DGNSS-basierte, Lokalisierungsmethode, d. h. für die auf dem mindestens einen globalen Navigationssatellitensystem, insbesondere differentiellen globalen Navigationssatellitensystem, basierende Lokalisierungsmethode LMG, wird beispielsweise RAIM (Receiver Autonomous Monitoring) verwendet. Dies ist ein aus der Luftfahrttechnik bekanntes Verfahren zur Beurteilung der Integrität (Maß des Vertrauens, das man in die ermittelte GNSS-Position setzen kann) einer ermittelten GNSS-Position. RAIM beruht auf der Tatsache, dass man für die satellitengestützte Lokalisierung Signale von vier Satelliten benötigt, und dass man, wenn mehr als vier Satelliten verfügbar sind, eine Grenze, d. h. die Fehlerobergrenze PL (Protection Limit) um einen Lokalisierungspunkt (GNSS-Position) definieren kann, die die tatsächliche Position des Fahrzeugs 1 mit hoher Sicherheit enthält.

Die Sollgrenze AL, die um die aktuell ermittelte Position GNSSP des Fahrzeugs 1 gelegt wird, legt fest, in welchem Bereich sich das Fahrzeug 1 tatsächlich befinden muss, wenn der Feststellung, dass das Fahrzeug 1 sich auf einem für den automatisierten Fahrbetrieb freigegebenen Streckenabschnitt FS befindet, vertraut werden soll. Insbesondere wird die Sollgrenze AL derart vorgegeben, dass konkurrierende Straßen ausgeschlossen werden, d. h. klein genug, dass ein von der Sollgrenze AL umschlossener Bereich keine Positionen auf benachbarten, nicht für den automatisierten Fahrbetrieb freigegebenen Streckenabschnitten NFS umfasst.

Die Fehlerobergrenze PL wird ermittelt und mit der Sollgrenze AL verglichen. Wenn die Fehlerobergrenze PL kleiner als die Sollgrenze AL ist, liegt die tatsächliche Position des Fahrzeugs 1 mit Sicherheit innerhalb des von der Sollgrenze AL umgrenzten Bereichs und somit mit hoher Sicherheit auf einem für den automatisierten Fahrbetrieb freigegebenen Streckenabschnitt FS. Wenn die Fehlerobergrenze PL hingegen größer ist als die Sollgrenze AL, wie in Figur 3 gezeigt, kann nicht ausgeschlossen werden, dass das Fahrzeug 1 sich auf einem nicht für den automatisierten Fahrbetrieb freigegebenen Streckenabschnitt NFS befindet, obwohl die ermittelte GNSS-Position sich auf einem für den automatisierten Fahrbetrieb freigegebenen Streckenabschnitt FS befindet. In diesem Fall ist das Lokalisierungsergebnis unsicher und wird daher bei der Entscheidung, ob der automatisierte Fahrbetrieb zugelassen werden soll, nicht berücksichtigt. D. h. das Fahrzeugsystem 9 zur Durchführung des automatisierten Fahrbetriebs wird dann nicht zur Aktivierung freigegeben.

Eine Wahrscheinlichkeit eines Unterschätzens der Fehlerobergrenze PL ist sehr gering, kann aber beispielsweise alle 10¹ bis 10⁷ Stunden auftreten, abhängig von einer Systemqualität. Für ein automobiles System sind die 10⁷ Stunden, d. h. 10⁷ Betriebsstunden des Fahrzeugs 1, jedoch schwer zu erreichen, so dass diese Gefahr gering ist. Die Falsch-Positiv-Rate kann jedoch in jedem Fall mathematisch beschränkt werden.

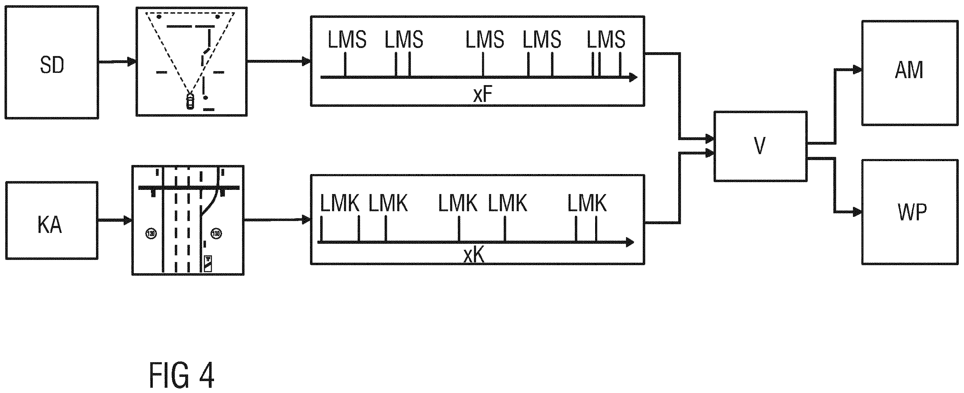

Bei der landmarkenbasierten Lokalisierungsmethode LML als dritte Verfahrenskomponente VK3 wird, wie in Figur 4 gezeigt, durch Vergleichen von sensorisch ermittelten Landmarkensignaturen mit aus einer, insbesondere hochauflösenden, digitalen Karte 5 entnommenen Landmarkensignaturen eine wahrscheinlichste Position WP des Fahrzeugs 1 in der digitalen Karte 5 und ein Ähnlichkeitsmaß AM der Signaturübereinstimmung ermittelt. Hierzu wird die aktuelle (ungenaue) Position GNSSP des Fahrzeugs 1 satellitengestützt ermittelt und von einem fahrzeugexternen Server 7 wird der der aktuellen Position GNSSP zugeordneter Kartenausschnitt KA der insbesondere hochauflösenden digitalen Karte 5 (HAD map) heruntergeladen. Aus der digitalen Karte 5 werden Landmarkenobjekte LMK und somit Landmarkensignaturen extrahiert. Mit der Fahrzeugsensorik 4 werden Landmarkensignaturen sensorisch erfasst, d. h. es werden aus Sensordaten SD der Fahrzeugsensorik 4 Landmarkenobjekte LMS ermittelt. Es erfolgt dann ein Vergleich V dieser Landmarkensignaturen.
Dazu werden für die ermittelten Landmarkensignaturen eine Vielzahl von Positionshypothesen PH erstellt, die die Position des Fahrzeugs 1 repräsentieren. Durch Vergleichen der Positionshypothesen PH wird geprüft, welche der Positionshypothesen PH sich am ähnlichsten sind und wie sicher diese Ähnlichkeit ist. Da wo sich die ähnlichen Positionshypothesen PH häufen, liegt die der wahrscheinlichsten Position WP in der digitalen Karte 5 entsprechende Positionshypothese PH. Aus der Verteilung der Häufung kann man entnehmen, wie ähnlich die Landmarkensignaturen sind und mit welcher Sicherheit man davon ausgehen kann, dass die ermittelte wahrscheinlichste Position WP der tatsächlichen Position entspricht. Es wird somit ein Ähnlichkeitsmaß AM bestimmt, bei dem gesichert ist, dass eine Fehlerrate kleiner als ein vorgegebener Wert ist. Wenn das Ähnlichkeitsmaß AM höher ist als eine vorgegebene Schwelle von zum Beispiel 99,99%, ist das Ergebnis positiv und die ermittelte wahrscheinlichste Position WP wird als gültig angesehen. Andernfalls ist das Ergebnis negativ und die ermittelte wahrscheinlichste Position WP wird somit als ungültig verworfen.

Eine Übereinstimmung von Landmarkensignaturen aus der digitalen Karte 5 mit von der Fahrzeugsensorik 4 erfassten Landmarkensignaturen ist somit schlüssig, wenn eine zufällige Übereinstimmung solcher Landmarkensignaturen dieser Größe und Form statistisch sehr unwahrscheinlich ist. Der Restwert der Wahrscheinlichkeit für eine solche zufällige Übereinstimmung kann mathematisch beschränkt werden. Diese Wahrscheinlichkeit ist umso niedriger, je größer die Landmarkensignatursätze sind, d. h. je mehr Landmarkensignaturen verglichen werden, und je besser die Landmarkensignaturen klassifiziert sind. Es wird eine Falsch-Positiv-Rate vorgegeben, welche noch akzeptabel ist und für welche eine erforderliche Landmarkensatzgröße ausreichend schnell erreicht wird. Beispielsweise wird die Falsch-Positiv-Rate derart vorgegeben, dass eine zufällige Übereinstimmung nur alle 10 bis 1000 Stunden auftritt.

Eine Bestätigung, dass das Fahrzeug 1 sich auf einem für den automatisierten Fahrbetrieb freigegebenen Streckenabschnitt FS befindet, wird nur dann ausgegeben, wenn die ermittelte wahrscheinlichste Position WP sich auf dem für den automatisierten Fahrbetrieb freigegebenen Streckenabschnitt FS befindet und wenn zudem das ermittelte Ähnlichkeitsmaß AM die vorgegebene Ähnlichkeitsschwelle überschreitet.

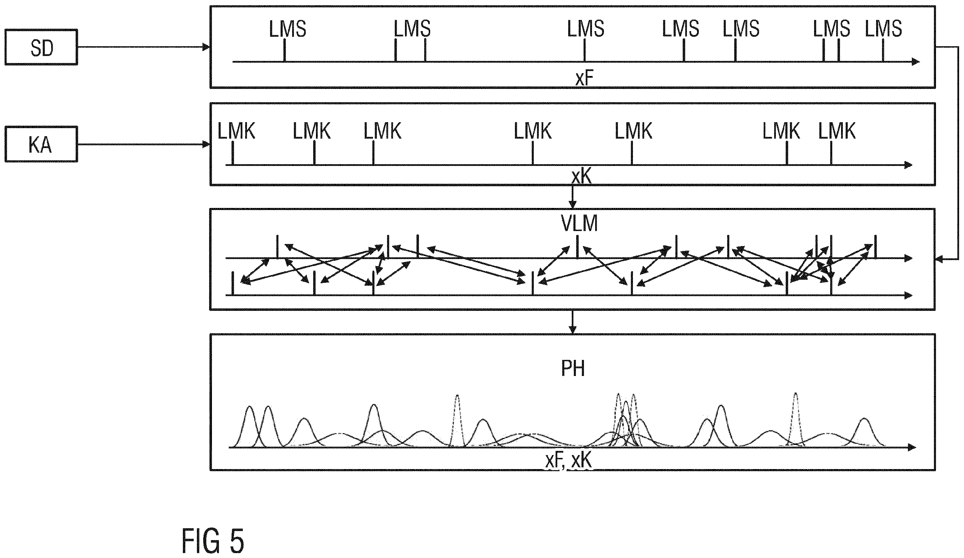

Im Folgenden wird anhand der Figuren 5 bis 7 eine beispielhafte Vorgehensweise der landmarkenbasierten Lokalisierung nochmals im Detail erläutert. Diese Vorgehensweise umfasst drei Schritte. Im ersten Schritt wird ein Vergleich VLM der Landmarkenobjekte LMS aus den Sensordaten SD mit den Landmarkenobjekten LMK aus der digitalen Karte 5 durchgeführt, wie in Figur 5 gezeigt. Hierzu werden aus den Sensordaten SD der Fahrzeugsensorik 4 des Fahrzeugs 1 mögliche Landmarkenobjekte LMS ermittelt, indem räumliche Muster der möglichen Landmarkenobjekte LMS über die Wegstrecke xF des Fahrzeugs 1 hinweg ermittelt werden. Aus dem Kartenausschnitt KA werden in der digitalen Karte 5 verzeichnete Landmarken LMK ermittelt, indem räumliche Muster der Landmarken LMK im selben räumlichen Rahmen über eine Kartenwegstrecke xK hinweg ermittelt werden. Nun wird der Vergleich VLM dieser Landmarkenobjekte LMS, LMK, genauer gesagt ein Vergleich VLM der Muster der Landmarkenobjekte LMS, LMK, durchgeführt. Daraus werden die Positionshypothesen PH ermittelt. Dabei werden vorteilhafterweise alle durch die Fahrzeugsensorik 4 erfassten Landmarkenobjekte LMS, insbesondere auch bereits vom Fahrzeug 1 passierte Landmarkenobjekte LMS, berücksichtigt. Der Abgleich findet somit mit mitgeschriebenen Verteilungen von Landmarkenobjekten LMS statt, d. h. anhand der Landmarkensignaturen.

Bei dem Vergleich VLM werden alle möglichen Übereinstimmungen berücksichtigt, nicht nur nächstgelegene Punkte, so dass eine Mehrzahl von Positionshypothesen PH ermittelt werden. Jede Positionshypothese PH hat eine räumliche Ungewissheit basierend auf Messrauschen, Kartenfehler und Odometrie-Unsicherheiten.

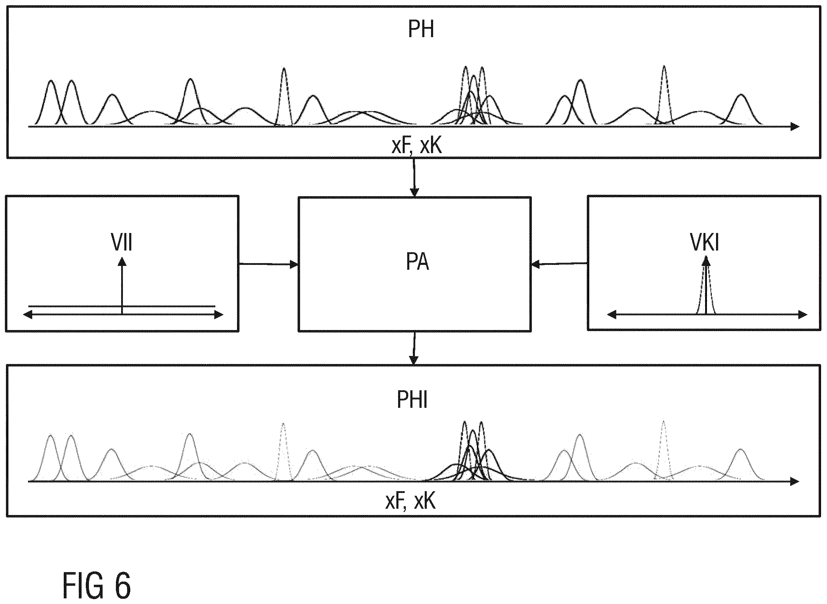

Im zweiten Schritt wird eine probabilistische Analyse PA durchgeführt, wie in Figur 6 gezeigt. Dabei wird durch eine Analyse aller Positionshypothesen PH und ein Ausfiltern aller Falschinformationen mittels der probabilistischen Analyse PA eine Positionshypothese PHI mit einem Integritätswert ermittelt. Hierzu wird mit den Positionshypothesen PH, einem Verteilungsmodell VII irreführender Informationen und einem Verteilungsmodell VKI korrekter Informationen die probabilistische Analyse PA durchgeführt. Daraus resultiert die Positionshypothese PHI mit dem Integritätswert.

Eine falsche Information folgt einer anderen Verteilung als die korrekte Information, normalerweise sehr unabhängig von der tatsächlichen Position, zum Beispiel eine gleiche räumliche Verteilung. Die Nicht-Ausreißer-Übereinstimmungen hängen notwendigerweise mit der tatsächlichen Position zusammen und bilden jede mögliche räumliche Form um sie herum, zum Beispiel eine Gauss-Verteilung. Analysiert man alle Positionshypothesen PH in Bezug zueinander, erhält man eine Schätzung über die Wahrscheinlichkeit, dass jede von ihnen aus einer der beiden Verteilungen stammt, und somit ihre Wahrscheinlichkeit, eine irreführende Information zu sein.

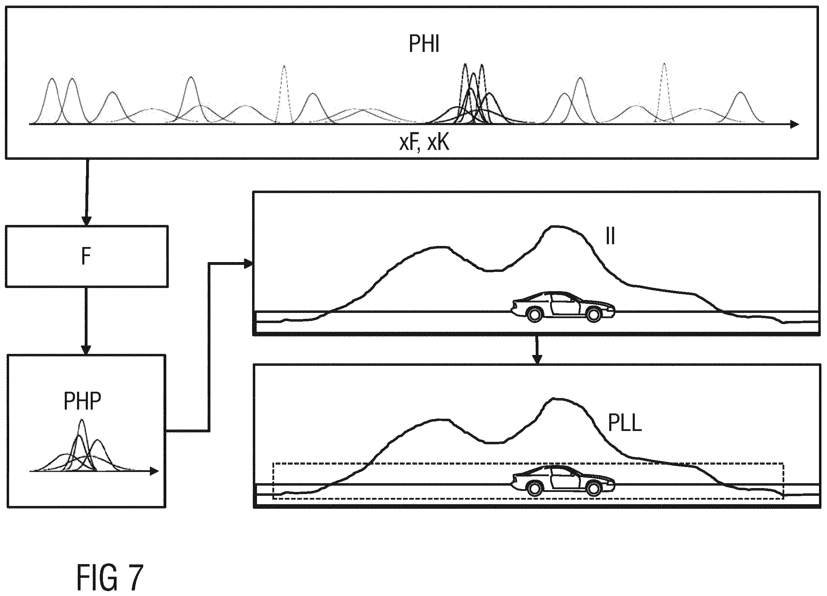

Im dritten Schritt erfolgt eine Einbindung von Informationen, wie in Figur 7 gezeigt. Durch eine Filterung F nach vorgegebenen Grenzwerten der Integrität wird eine Positionshypothese PHP mit einer, insbesondere auf vorgegebene Weise, ausreichenden Positionsgenauigkeit für die Positionsbestimmung des Fahrzeugs 1 ermittelt. Anschließend erfolgt eine Integration II dieser Informationen, um dadurch eine Fehlerobergrenze PLL der landmarkenbasierten Lokalisierungsmethode LML zu ermitteln.

Die Positionshypothesen PHI mit Integritätswert werden nach ihren Chancen gefiltert, irreführende Informationen zu sein. Die Schwelle hängt von der gewünschten Falsch-Positiv-Rate für die Fehlerüberschreitung ab. Je niedriger der Schwellenwert ist, desto weniger Positionshypothesen PHI mit Integritätswert werden als gut genug, d. h. als eine ausreichende Positionsgenauigkeit aufweisend, erachtet.

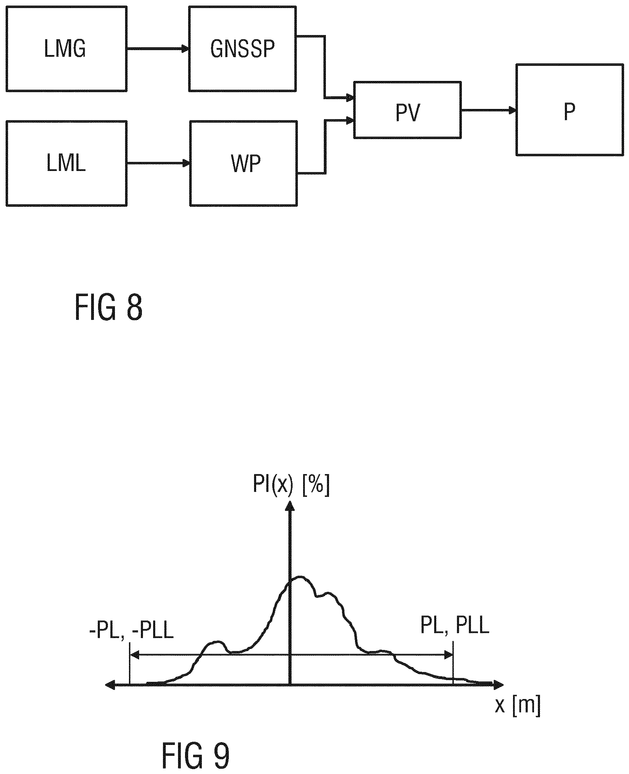

Als vierte Verfahrenskomponente VK4 erfolgt, wie bereits oben beschrieben, die Plausibilisierung, d. h. eine Plausibilitätsbewertung P. Die mittels der landmarkenbasierten Lokalisierungsmethode LML ermittelte wahrscheinlichste Position WP, insbesondere Längsposition, wird, wie in Figur 8 gezeigt, in einem Positionsvergleich PV mit der satellitengestützt ermittelten Position, d. h. mit der mittels der auf dem mindestens einen globalen Navigationssatellitensystem basierenden Lokalisierungsmethode LMG ermittelten Position GNSSP, insbesondere Längsposition, verglichen und nur dann als plausibel bewertet, wenn die beiden ermittelten Positionen WP, GNSSP nahe beieinander liegen, insbesondere innerhalb eines vorgegebenen Maximalabstandes zueinander liegen. D. h. die Plausibilitätsbewertung P hat nur dann ein positives Ergebnis. Andernfalls wird die ermittelte wahrscheinlichste Position WP als unplausibel verworfen, d. h. die Plausibilitätsbewertung P hat ein negatives Ergebnis. Eine Bestätigung, dass das Fahrzeug 1 sich auf einem für den automatisierten Fahrbetrieb freigegebenen Streckenabschnitt FS befindet, wird nur dann ausgegeben, wenn die ermittelte wahrscheinlichste Position WP als plausibel bewertet worden ist.

Es ist unwahrscheinlich, dass die landmarkenbasierte Lokalisierungsmethode LML und die auf dem mindestens einen globalen Navigationssatellitensystem basierende Lokalisierungsmethode LMG den gleichen Fehler ergeben. Daher kann man davon ausgehen, dass die mit diesen beiden Methoden ermittelten Positionen WP, GNSSP, insbesondere Längspositionen, fehlerfrei und daher plausibel sind, wenn sie nahe beieinander liegen. Auf diese Weise wird die Falsch-Positiv-Rate der Road Path Integrity, d. h. der Lokalisierungsintegrität RPI um eine weitere Größenordnung reduziert.

Abschließend wird noch die Fehlerobergrenze PL, PLL von Positionsinformationen PI erläutert. Figur 9 zeigt eine unbekannte tatsächliche Verteilung von Fehlern zwischen der negativen und positiven Fehlerobergrenze PL, PLL. µ ist der Mittelwert und Sigma die Wurzel der normalisierten Summe der Abweichungen vom Mittelwert. Figur 10 zeigt eine angenommene Verteilung von Fehlern.

Die angegebene Genauigkeit ist die typische Abweichung vom tatsächlichen Wert, d. h. Sigma der tatsächlichen Verteilung. Die spezifizierte Fehlergrenze PL, PLL ist eine Begrenzungsbox, die alle außer zum Beispiel 10⁻⁷ Fehler enthält. Die angegebene Verfügbarkeit ist der Prozentsatz der Zeit, in der das System diese
Fehlerobergrenze PL, PLL bereitstellen kann.

Die Genauigkeit kann größtenteils mit großen Testprobensätzen und einer Grundwahrheitsreferenz verifiziert werden. Eine Online-Optimierungssoftware erzeugt auch Sigma-Werte, um die geschätzte Genauigkeit anzuzeigen, aber dies basiert auf einer Modellverteilung von Fehlern, die sich gravierend von der tatsächlichen Verteilung unterscheiden kann. Daher ist dies nicht die echte Präzision, und definitiv nicht ausreichend, um eine Fehlerobergrenze PL, PLL zu ermitteln, so dass ein zusätzliches Monitoring notwendig ist.

Die in Figur 11 gezeigte Vorrichtung 2 zur Durchführung des Verfahrens umfasst insbesondere mindestens einen Empfänger 3 für Signale mindestens eines globalen Navigationssatellitensystems und eine Fahrzeugsensorik 4, insbesondere umfassend mindestens einen Sensor oder eine Mehrzahl gleicher und/oder verschiedener Sensoren, zum Erfassen von Landmarkensignaturen. Des Weiteren umfasst die Vorrichtung 2 insbesondere mindestens eine digitale Karte 5 und/oder, wie hier dargestellt, mindestens eine Kommunikationsschnittstelle 6 zur Kommunikation mit einem fahrzeugexternen Server 7 zum Herunterladen mindestens eines Kartenausschnitts KA der digitalen Karte 5. Zudem umfasst die Vorrichtung 2 insbesondere mindestens eine Verarbeitungseinheit 8. In Abhängigkeit von einem von der Vorrichtung 2 mittels des Verfahrens ermittelten Ergebnis wird das Fahrzeugsystem 9 entweder zur Aktivierung freigegeben oder nicht freigegeben.

## Patentansprüche

1. Verfahren zum Steuern eines zur Durchführung eines automatisierten Fahrbetriebs eingerichteten Fahrzeugsystems (9) eines Fahrzeugs (1), wobei das Fahrzeug (1) lokalisiert wird und wobei das Fahrzeugsystem (9) in Abhängigkeit von einem Ergebnis der Lokalisierung zur Aktivierung freigegeben wird,
**dadurch gekennzeichnet, dass**
- das Fahrzeug (1) mit mindestens zwei unterschiedlichen Lokalisierungsmethoden (LML, LMG) lokalisiert wird, wobei die mindestens zwei Lokalisierungsmethoden (LML, LMG) zumindest eine landmarkenbasierte Lokalisierungsmethode (LML) und eine auf mindestens einem globalen Navigationssatellitensystem basierende Lokalisierungsmethode (LMG) umfassen, und
- das Fahrzeugsystem (9) nur dann zur Aktivierung freigegeben wird, wenn mit jeder der angewendeten Lokalisierungsmethoden (LML, LMG) bestätigt wird, dass das Fahrzeug (1) sich auf einem für den automatisierten Fahrbetrieb freigegebenen Streckenabschnitt (FS) befindet.

2. Verfahren nach Anspruch 1,
**dadurch gekennzeichnet, dass**
bei der landmarkenbasierten Lokalisierungsmethode (LML) durch Vergleichen von sensorisch ermittelten Landmarkensignaturen mit aus einer digitalen Karte (5) entnommenen Landmarkensignaturen eine wahrscheinlichste Position (WP) des Fahrzeugs (1) in der digitalen Karte (5) und ein Ähnlichkeitsmaß (AM) der Signaturübereinstimmung ermittelt werden.

3. Verfahren nach Anspruch 2,
**dadurch gekennzeichnet, dass**
eine Bestätigung, dass das Fahrzeug (1) sich auf einem für den automatisierten Fahrbetrieb freigegebenen Streckenabschnitt (FS) befindet, nur dann ausgegeben wird, wenn die ermittelte wahrscheinlichste Position (WP) sich auf diesem für den automatisierten Fahrbetrieb freigegebenen Streckenabschnitt (FS) befindet und wenn zudem das ermittelte Ähnlichkeitsmaß (AM) eine vorgegebene Ähnlichkeitsschwelle überschreitet.

4. Verfahren nach Anspruch 2 oder 3,
**dadurch gekennzeichnet, dass**
die ermittelte wahrscheinlichste Position (WP) mit einer mittels der auf dem mindestens einen globalen Navigationssatellitensystem basierenden Lokalisierungsmethode (LMG) ermittelten Position (GNSSP) verglichen wird.

5. Verfahren nach Anspruch 4,
**dadurch gekennzeichnet, dass**
die ermittelte wahrscheinlichste Position (WP) als plausibel bewertet wird, wenn die beiden ermittelten Positionen (WP, GNSSP) nahe beieinander liegen, insbesondere innerhalb eines vorgegebenen Maximalabstandes zueinander liegen.

6. Verfahren nach Anspruch 5,
**dadurch gekennzeichnet, dass**
eine Bestätigung, dass das Fahrzeug (1) sich auf einem für den automatisierten Fahrbetrieb freigegebenen Streckenabschnitt (FS) befindet, nur dann ausgegeben wird, wenn die ermittelte wahrscheinlichste Position (WP) als plausibel bewertet worden ist.

7. Verfahren nach einem der vorhergehenden Ansprüche,
**dadurch gekennzeichnet, dass**
bei der auf dem mindestens einen globalen Navigationssatellitensystem basierenden Lokalisierungsmethode (LMG) eine aktuelle Position (GNSSP) des Fahrzeugs (1) ermittelt wird, eine Fehlerobergrenze (PL) für die erwartete Abweichung einer tatsächlichen Fahrzeugposition von der ermittelten Position (GNSSP) ermittelt wird und eine Sollgrenze (AL) derart definiert wird, dass ein von der Sollgrenze (AL) umfasster Bereich keine Bereiche von benachbarten Straßen umfasst, wobei eine Bestätigung, dass das Fahrzeug (1) sich auf einem für den automatisierten Fahrbetrieb freigegebenen Streckenabschnitt (FS) befindet, nur dann ausgegeben wird, wenn die ermittelte Fehlerobergrenze (PL) innerhalb des von der Sollgrenze (AL) umfassten Bereichs liegt.

8. Verfahren nach einem der vorhergehenden Ansprüche,
**dadurch gekennzeichnet, dass**
für die landmarkenbasierte Lokalisierungsmethode (LML) von einem fahrzeugexternen Server (7) ein Kartenausschnitt (KA) der digitalen Karte (5) heruntergeladen wird, welcher einer aktuellen Position (GNSSP) des Fahrzeugs (1) zugeordnet ist, die mittels der auf dem mindestens einen globalen Navigationssatellitensystem basierenden Lokalisierungsmethode (LMG) ermittelt wurde.

9. Vorrichtung (2) zur Durchführung eines Verfahrens nach einem der Ansprüche 1 bis 8, wobei die Vorrichtung (2) dazu eingerichtet ist, das Fahrzeug (1) zu lokalisieren und das Fahrzeugsystem (9) in Abhängigkeit von einem Ergebnis der Lokalisierung zur Aktivierung freizugeben, wobei
- die Vorrichtung (2) dazu eingerichtet ist, das Fahrzeug (1) mit mindestens zwei unterschiedlichen Lokalisierungsmethoden (LML, LMG) zu lokalisieren, wobei die mindestens zwei Lokalisierungsmethoden (LML, LMG) zumindest eine landmarkenbasierte Lokalisierungsmethode (LML) und eine auf mindestens einem globalen Navigationssatellitensystem basierende Lokalisierungsmethode (LMG) umfassen,
und
- wobei die Vorrichtung (2) dazu eingerichtet ist, das Fahrzeugsystem (9) nur dann zur Aktivierung freizugeben, wenn mit jeder der angewendeten Lokalisierungsmethoden (LML, LMG) bestätigt wird, dass das Fahrzeug (1) sich auf einem für den automatisierten Fahrbetrieb freigegebenen Streckenabschnitt (FS) befindet.

10. Vorrichtung (2) nach Anspruch 9, umfassend
- mindestens einen Empfänger (3) für Signale mindestens eines globalen Navigationssatellitensystems,
- eine Fahrzeugsensorik (4) zum Erfassen von Landmarkensignaturen,
- mindestens eine digitale Karte (5) und/oder mindestens eine Kommunikationsschnittstelle (6) zur Kommunikation mit einem fahrzeugexternen Server (7) zum Herunterladen mindestens eines Kartenausschnitts (KA) der digitalen Karte (5),
- mindestens eine Verarbeitungseinheit (8).

## Claims

1. Method for controlling a vehicle system (9) of a vehicle (1) set up for carrying out an automated driving operation, wherein the vehicle (1) is localised and wherein the vehicle system (9) is enabled for activation depending on a result of the localisation, **characterised in that**
- the vehicle (1) is localised using at least two different localisation methods (LML, LMG), wherein the at least two localisation methods (LML, LMG) include at least one landmark-based localisation method (LML) and a localisation method (LMG) based on at least one global navigation satellite system, and
- the vehicle system (9) is only enabled for activation if it has been confirmed by means of each of the localisation methods (LML, LMG) used that the vehicle (1) is on a route section (FS) approved for the automated driving operation.

2. Method according to claim 1,
**characterised in that**
the landmark-based localisation method (LML) compares sensorially determined landmark signatures with landmark signatures taken from a digital map (5) in order to determine a most probable position (WP) of the vehicle (1) on the digital map (5) and a degree of similarity (AM) of the signature match.

3. Method according to claim 2,
**characterised in that**
a confirmation that the vehicle (1) is on a route section (FS) approved for the automated driving operation is only output
if the determined most probable position (WP) is on said route section (FS) approved for the automated driving operation and also if the determined degree of similarity (AM) exceeds a predefined similarity threshold.

4. Method according to claim 2 or 3,
**characterised in that**
the determined most probable position (WP) is compared with a position (GNSSP) determined by means of the localisation method (LMG) based on the at least one global navigation satellite system.

5. Method according to claim 4, **characterised in that**
the determined most probable position (WP) is considered plausible if the two determined positions (WP, GNSSP) are close to one another, in particular within a predefined maximum distance from one another.

6. Method according to claim 5, **characterised in that**
a confirmation that the vehicle (1) is on a route section (FS) approved for the automated driving operation is only output if the determined most probable position (WP) has been considered plausible.

7. Method according to any of the preceding claims, **characterised in that**,
in the localisation method (LMG) based on the at least one global navigation satellite system, a current position (GNSSP) of the vehicle (1) is determined, a protection limit (PL) is determined for the expected deviation of an actual vehicle position from the determined position (GNSSP) and an alert limit (AL) is defined such that a region covered by the alert limit (AL) does not include any regions of adjacent roads, wherein a confirmation that the vehicle (1) is on a route section (FS) approved for the automated driving operation is only output if the determined protection limit (PL) is within the region covered by the alert limit (AL).

8. Method according to any of the preceding claims,
**characterised in that**
a map section (KA) of the digital map (5) is downloaded from a vehicle-external server (7) for the landmark-based localisation method (LML), which map section is assigned to a current position (GNSSP) of the vehicle (1) that was determined by means of the localisation method (LMG) based on the at least one global navigation satellite system.

9. Device (2) for carrying out a method according to any of claims 1 to 8, wherein the device (2) is set up to localise the vehicle (1) and to enable the vehicle system (9) for activation depending on a result of the localisation, wherein
- the device (2) is set up to localise the vehicle (1) using at least two different localisation methods (LML, LMG), wherein the at least two localisation methods (LML, LMG) include at least one landmark-based localisation method (LML) and a localisation method (LMG) based on at least one global navigation satellite system,
and
- wherein the device (2) only enables the vehicle system (9) for activation if it has been confirmed by means of each of the localisation methods (LML, LMG) used that the vehicle (1) is on a route section (FS) approved for the automated driving operation.

10. Device (2) according to claim 9, comprising
- at least one receiver (3) for signals from at least one global navigation satellite system,
- a vehicle sensor system (4) for detecting landmark signatures,
- at least one digital map (5) and/or at least one communication interface (6) for communicating with a vehicle-external server (7) for downloading at least one map section (KA) of the
digital map (5),
- at least one processing unit (8).

## Revendications

1. Procédé de commande d'un système de véhicule (9) configuré pour la réalisation d'un mode de conduite automatisée d'un véhicule (1), dans lequel le véhicule (1) est localisé et dans lequel le système de véhicule (9) est déclenché pour l'activation en fonction d'un résultat de la localisation,
**caractérisé en ce que**
- le véhicule (1) est localisé avec au moins deux méthodes de localisation différentes (LML, LMG), dans lequel les au moins deux méthodes de localisation (LML, LMG) comprennent au moins une méthode de localisation (LML) basée sur des monuments et une méthode de localisation (LMG) se basant sur au moins une géolocalisation et navigation par un système de satellites,
et
- le système de véhicule (9) n'est ensuite déclenché pour l'activation que lorsqu'il est confirmé avec chacune des méthodes de localisation utilisées (LML, LMG) que le véhicule (1) se trouve sur une section de trajet (FS) déclenchée pour le mode de conduite automatisée.

2. Procédé selon la revendication 1,
**caractérisé en ce que**
dans le cas de la méthode de localisation (LML) basée sur des monuments, une position la plus probable (WP) du véhicule (1) dans la carte numérique (5) et une mesure de similarité (AM) de la concordance de signatures sont déterminées par comparaison de signatures de monuments déterminées par des capteurs à des signatures de monuments prélevées d'une carte numérique (5).

3. Procédé selon la revendication 2,
**caractérisé en ce que**
une confirmation que le véhicule (1) se trouve sur une section de trajet (FS) déclenchée pour le mode de conduite automatisée n'est ensuite émise que lorsque la position la plus probable déterminée (WP) se trouve sur cette section de trajet (FS) déclenchée pour le mode de conduite automatisée et lorsque le mesure de similarité déterminée (AM) dépasse en outre un seuil de similarité prédéfini.

4. Procédé selon la revendication 2 ou 3,
**caractérisé en ce que**
la position la plus probable déterminée (WP) est comparée à une position (GNSSP) déterminée au moyen de la méthode de localisation (LMG) se basant sur l'au moins une géolocalisation et navigation par un système de satellites.

5. Procédé selon la revendication 4,
**caractérisé en ce que**
la position la plus probable déterminée (WP) est évaluée comme plausible lorsque les deux positions déterminées (WP, GNSSP) se situent à proximité l'une de l'autre, se situent notamment au sein d'une distance maximale prédéfinie l'une par rapport à l'autre.

6. Procédé selon la revendication 5,
**caractérisé en ce que**
une confirmation que le véhicule (1) se trouve sur une section de trajet (FS) déclenchée pour le mode de conduite automatisée n'est ensuite émise que lorsque la position la plus probable déterminée (WP) a été évaluée comme plausible.

7. Procédé selon une des revendications précédentes,
**caractérisé en ce que**
dans le cas de la méthode de localisation (LMG) se basant sur l'au moins une géolocalisation et navigation par un système de satellites, une position actuelle (GNSSP) du véhicule (1) est déterminée, une limite supérieure d'erreur (PL) pour l'écart attendu entre une position de véhicule réelle et la position déterminée (GNSSP) est déterminée, et une limite de consigne (AL) est définie de telle sorte qu'une zone comprise par la limite de consigne (AM) ne comprend aucune zone de rues voisines, dans lequel une confirmation que le véhicule (1) se trouve sur une section de trajet (FS) déclenchée pour le mode de conduite automatisée n'est ensuite émise que lorsque la limite supérieure d'erreur déterminée (PL) se situe au sein de la zone comprise par la limite de consigne (AL).

8. Procédé selon une des revendications précédentes,
**caractérisé en ce que**
pour la méthode de localisation (LML) basée sur des monuments, un extrait de carte (KA) de la carte numérique (5) est téléchargé par un serveur externe au véhicule (7), lequel est associé à une position actuelle (GNSSP) du véhicule (1) qui a été déterminée au moyen de la méthode de localisation (LMG) se basant sur l'au moins une géolocalisation et navigation par un système de satellites.

9. Dispositif (2) pour la réalisation d'un procédé selon une des revendications 1 à 8, dans lequel le dispositif (2) est configuré pour localiser le véhicule (1) et déclencher le système de véhicule (9) pour l'activation en fonction d'un résultat de la localisation, dans lequel
- le dispositif (2) est configuré pour localiser le véhicule (1) avec au moins deux méthodes de localisation différentes (LML, LMG), dans lequel les au moins deux méthodes de localisation (LML, LMG) comprennent au moins une méthode de localisation (LML) basée sur des monuments et une méthode de localisation (LMG) se basant sur au moins une géolocalisation et navigation par un système de satellites,
et
- dans lequel le dispositif (2) est configuré pour ne déclencher ensuite le système de véhicule (9) pour l'activation que lorsqu'il est confirmé avec chacune des méthodes de localisation utilisées (LML, LMG) que le véhicule (1) se trouve sur une section de trajet (FS) déclenchée pour le mode de conduite automatisée.

10. Dispositif (2) selon la revendication 9, comprenant
- au moins un récepteur (3) pour des signaux d'au moins une géolocalisation et navigation par un système de satellites,
- une technologie de capteurs de véhicule (4) pour la détection de signatures de monuments,
- au moins une carte numérique (5) et/ou au moins une interface de communication (6) pour la communication avec un serveur externe au véhicule (7) pour le téléchargement d'au moins un extrait de carte (KA) de la carte numérique (5),
- au moins un module de traitement (8).
